# FASCICULE DE BREVET EUROPEEN

(11) **EP 1 185 716 B1**
(45) Date de publication et mention de la délivrance du brevet: **03.03.2004**
(21) Numéro de dépôt: 99957643.2
(22) Date de dépôt: 17.06.1999
(51) Int. Cl.: C21D 8/02

(54) **PROCEDE DE FABRICATION D'UNE CARCASSE METALLIQUE POUR CONDUITE FLEXIBLE OU OMBILICAL**
VERFAHREN ZUR HERSTELLUNG EINER METALLKARKASSE FÜR EINE FLEXIBLE LEITUNG ODER EIN VERBINDUNGSKABEL
METHOD FOR MAKING A METAL CARCASS FOR A FLEXIBLE CONDUIT OR UMBILICAL

(30) Priorité: 30.06.1998 FR 9808323
(43) Date de publication de la demande: 13.03.2002
(73) Titulaire: Technip France, 92400 Courbevoie (FR)
(72) Inventeur: DUPOIRON, François, F-76360 Barentin (FR)
(74) Mandataire: Levy, David
(86) Numéro de dépôt international: PCT/FR1999/001463
(87) Numéro de publication internationale: WO 2000/000650

(56) Documents cités:
- EP-A- 0 429 357
- WO-A-92/02751
- WO-A-96/18060
- FR-A- 2 560 608
- GB-A- 1 376 266

## Description

La présente invention concerne un procédé de fabrication d'une carcasse métallique pour conduite flexible ou ombilical et, plus particulièrement, la fabrication d'un feuillard utilisable pour la réalisation d'une carcasse métallique.

La conduite flexible à laquelle il est fait référence dans ce qui suit est celle qui est utilisée en exploitation pétrolière au large ("off-shore" en anglais) et qui comprend, de l'intérieur vers l'extérieur, une carcasse métallique, une gaine d'étanchéité interne, une voûte de pression, une ou plusieurs nappes d'armure et une gaine d'étanchéité externe. Une telle conduite flexible est désignée par les spécialistes comme étant une conduite flexible "rough-bore" par opposition à la conduite flexible dite "smooth-bore" et dont l'élément le plus interne est constitué par une gaine d'étanchéité interne sur laquelle est enroulée une voûte de pression.

Ces conduites flexibles doivent présenter un certain nombre de caractéristiques mécaniques et notamment une résistance à l'écrasement ("collapse" en anglais) qui peut être provoqué par la pression externe, lorsque la conduite flexible est en service notamment dans des applications grandes profondeurs, et/ou les pressions de contact qui s'exercent sur lesdites conduites flexibles notamment lors de la pose et de la manutention. Or, cette résistance à l'écrasement dépend souvent de la tenue mécanique de la carcasse métallique qui doit reprendre, presque à elle seule, l'effort de la pression externe.

La carcasse métallique est, en général, constituée par un profilé enroulé en spires agrafées les unes sur les autres, comme par exemple un feuillard agrafé ou un fil de forme agrafé tel qu'un fil en T, en U, en S ou en Z. L'enroulement du feuillard ou du fil de forme est effectué suivant un angle proche de 90°, de façon à ce que la flexibilité de la carcasse métallique produite ne soit pas affectée, de manière à conférer à la conduite flexible comprenant une telle carcasse métallique une flexibilité suffisante.

Dans ces conditions et pour améliorer la résistance à l'écrasement, plusieurs solutions ont été proposées.

Une première solution consiste à augmenter l'épaisseur du feuillard utilisé dans la réalisation de la carcasse métallique mais en conservant la même forme du profil en S. Toutefois, il y a une limitation de l'épaisseur qui ne peut être dépassée et qui est de l'ordre de 3 mm. Au-delà de cette épaisseur, l'outillage de profilage ne pourrait plus assurer le formage du feuillard, à moins de réaliser des outillages trop importants ce qui, économiquement, n'est pas acceptable. L'augmentation de poids n'est pas, en outre, compatible pour des applications grandes profondeurs.

Une deuxième solution consiste à augmenter la hauteur de la carcasse en conservant le même profil et la même épaisseur initiale du feuillard. Une telle solution conduit à une carcasse dont le poids est équivalent à la première solution. Ce type de carcasse est décrit dans EP-0 429 357. Là encore, on est limité par l'épaisseur du feuillard qui ne peut être supérieure à 3 mm.

Une troisième solution consiste à accroître l'inertie du profil en le simplifiant ; à cet effet, une carcasse dite de type feuillard caisson a été utilisée. Toutefois, le feuillard caisson entraînait une augmentation de l'épaisseur du feuillard et du volume de la carcasse métallique et, donc une augmentation du poids de la conduite flexible et du coût de cette dernière. La carcasse caisson est décrite dans le brevet EP-0 494 299.

Une quatrième solution consiste à augmenter la limite élastique du feuillard en utilisant des alliages métalliques à hautes performances comme les aciers inoxydables duplex ou tout autre alliage à hautes caractéristiques mécaniques (alliages base nickel). Cette dernière solution renchérit considérablement le coût de la carcasse métallique et en conséquence, de la conduite flexible pour certaines utilisations de cette dernière.

Le procédé décrit dans FR-A-2 560 608 augmente la limite élastique d'aciers ferritiques par déformation longitudinale et traitement de vieillissement d'une conduite déjà formée, de manière à améliorer sa résistance à l'écrasement.

Une carcasse d'une conduite flexible peut se déformer, lorsqu'une charge importante lui est appliquée, suivant deux modes principaux, à savoir le mode cardioïde ou le mode ovalisé. Pour éviter que l'ovalisation de la carcasse n'apparaisse trop rapidement, on utilise généralement une voûte de pression qui est dimensionnée de telle sorte que ladite ovalisation soit différée le plus longtemps possible. Ainsi, en pratique et dans les conditions d'utilisation de la conduite flexible, la carcasse métallique a tendance à ne se déformer qu'en mode cardioïde.

Pour augmenter les performances (résistance à l'écrasement) de la carcasse métallique en mode cardioïde, il est nécessaire d'augmenter les caractéristiques mécaniques des matériaux utilisés pour la réalisation de ladite carcasse métallique. Mais, lorsqu'on augmente d'une manière contrôlée les caractéristiques mécaniques du feuillard à partir duquel est réalisée la carcasse métallique, on aboutit parfois à un feuillard qui n'est plus formable suivant un profilé déterminé car il présente un allongement à la rupture (A %) insuffisant.

La présente invention a pour but un procédé de fabrication d'une carcasse métallique qui présente une résistance à l'écrasement améliorée sans augmentation de poids et ce, quel que soit le métal utilisé pour la confection du feuillard.

En d'autres termes, pour un même poids de carcasse métallique, on obtient une meilleure résistance à l'écrasement, cette amélioration des caractéristiques mécaniques pouvant être mise à profit de diverses manières, au gré du fabricant de conduites flexibles et/ou en fonction des conditions d'utilisation desdites conduites flexibles.

Un objet de la présente invention est un procédé de fabrication d'une carcasse métallique utilisable dans une conduite flexible comprenant une voûte de pression, dans lequel il est utilisé une bande d'un feuillard métallique qui est profilée puis enroulée hélicoïdalement pour constituer ladite carcasse métallique qui présente, en mode cardioïde, une résistance à l'écrasement donnée, caractérisé en ce que ledit feuillard est écroui avant profilage pour lui conférer un allongement à la rupture supérieure à 15 % et en ce que ladite carcasse métallique qui est réalisée à partir dudit feuillard écroui présente, en mode cardioïde, une résistance à l'écrasement supérieure d'au moins 15 % à ladite résistance à l'écrasement donnée, c'est-à-dire à la résistance à l'écrasement de la même carcasse obtenue à partir d'un feuillard n'ayant pas subi ledit écrouissage.

Un avantage de la présente invention réside dans le fait que le poids de la carcasse métallique peut être allégé sans pour autant diminuer la résistance à l'écrasement.

En effet, avec une résistance donnée à l'écrasement de la carcasse métallique obtenue selon l'invention, il est possible d'utiliser une conduite flexible soit à une plus grande profondeur avec le même poids de carcasse, soit à une profondeur plus réduite mais avec une carcasse allégée, puisqu'il est habituellement admis que la profondeur d'utilisation d'une conduite flexible dépend notamment de la résistance à l'écrasement, en mode cardioïde, de la carcasse métallique incluse dans ladite conduite flexible.

D'autres avantages et caractéristiques apparaîtront clairement à la lecture de la description d'un mode de réalisation préféré de l'invention.

L'écrouissage d'un métal ou d'un alliage sous des efforts supérieurs à sa limite d'élasticité permet de le transformer en un autre corps à limite d'élasticité supérieure accrue mais à domaine plastique réduit. C'est la raison pour laquelle les métaux qui sont habituellement écrouis sont réservés à des applications déterminées, comme par exemple, des applications dans le transport ferroviaire, dans la fabrication de câbles ou de ressorts. La perte de plasticité ou une aptitude au formage diminuée ne présentaient pas d'inconvénients majeurs ou elles étaient au contraire recherchées dans ces applications.

Jusqu'à présent, il n'avait nullement été envisagé d'utiliser un feuillard écroui au préalable pour la réalisation d'une carcasse métallique d'une conduite flexible pour la raison essentielle qu'il était connu que le feuillard écroui pouvait perdre son aptitude au formage, ce qui était rédhibitoire pour la réalisation de la carcasse métallique. De plus, on savait que le feuillard serait, après écrouissage, plus fragile. Ces principales raisons ont donc conduit les fabricants de conduites flexibles à rejeter toute forme d'écrouissage du feuillard afin d'être sûr de pouvoir le former suivant les différentes configurations rappelées ci-dessus et l'enrouler sur des bobines en vue d'un stockage notamment.

Contrairement aux idées reçues, il fut trouvé, selon l'invention, qu'il devenait possible d'écrouir un feuillard pour lui conférer des caractéristiques mécaniques améliorées tout en conservant son aptitude au formage. L'écrouissage sélectionné doit répondre à deux objectifs principaux :
- le premier objectif est que le feuillard, après écrouissage, devait présenter un allongement à la rupture, désignée par les métallurgistes et/ou les spécialistes des conduites flexibles par le facteur A %, au moins égal à 15 et, de préférence, supérieur à 20, quelle que soit la valeur de l'allongement à la rupture que présentait le feuillard avant écrouissage ;
- le deuxième objectif est que la résistance au collapse de la carcasse métallique, en mode cardioïde, soit supérieure d'au moins 15 % de celle d'une carcasse réalisée avec un feuillard non écroui ou insuffisamment écroui.

Si on prend, par exemple, un feuillard fabriqué à partir d'un métal référencé par 301 ou 304 L dans la norme AISI, et qu'on effectue les mesures de limite d'élasticité (Rₚ 0,2 en MPa) et de l'allongement à la rupture (A %), on trouve respectivement les valeurs de 310 MPa et 46. Lorsqu'on forme un tel feuillard suivant une configuration en S par exemple, il se produit localement un écrouissage, généralement aux changements de courbure lors du formage, l'écrouissage étant tantôt en compression (zones concaves), tantôt en extension ou traction (zones convexes). Il s'ensuit que la limite d'élasticité est augmentée aux changements de courbure pour conférer une Rₚ moyenne, au feuillard formé, de l'ordre de 540 MPa, l'allongement à la rupture passant de 46 % à 52 %. La résistance au collapse de la carcasse réalisée avec ce feuillard est de l'ordre de 122 bars.

Si on écrouit le feuillard avec la même nuance de métal ou une nuance équivalente telle que le 301 LN suivant le mode dit skinpass qui provoque un écrouissage superficiel, c'est-à-dire sur la partie superficielle seulement du feuillard, on améliore la limite d'élasticité puisqu'elle passe de 424 MPa à 466 MPa tout en ayant un allongement à la rupture de 38 %. La carcasse métallique, obtenue à partir de ce feuillard pré-écroui (skin-passed), présente une limite d'élasticité moyenne de 630 MPa avec un allongement à la rupture de 53 %. Toutefois, un tel pré-écrouissage n'améliore pas la résistance au collapse de la conduite flexible en mode cardioïde qui est toujours d'environ 122 à 125 bars pour un flexible de diamètre intérieur de 21 cm (8 pouces).

Par contre, lorsqu'on écrouit le feuillard de nuance 301 LN non pas suivant la norme dite skin pass mais suivant la norme C850, on obtient une limite d'élasticité Rₚ 0,2 de 552 MPa au lieu de 424 MPa avant écrouissage et un allongement à la rupture de 38 %, la carcasse métallique obtenue avec ce feuillard écroui à la norme C850 présentant une Rₚ 0,2 moyenne de 600 MPa et un allongement à la rupture de 31 %. La résistance au collapse en mode cardioïde est de 149 bars pour un flexible de diamètre intérieur égal à 21 cm (8 pouces).

En comparant ces derniers résultats avec ceux obtenus sans écrouissage, on constate que :
- la limite d'élasticité du feuillard est augmentée de 41,5 %,
- l'allongement à la rupture du feuillard est diminué de 7 % mais que, malgré cette diminution, l'aptitude au formage est maintenue,
- la résistance au collapse de la carcasse en mode cardioïde est égale à 149 bars soit une augmentation de plus de 22 %.

Cette comparaison montre que pour une structure de conduite flexible comprenant une voûte de pression et pour un même poids de carcasse de 14,84 kg/m (diamètre d'environ 20 cm ou 8 pouces, dimensions du feuillard 48 x 1 en mm), les caractéristiques mécaniques de la carcasse métallique sont nettement améliorées. L'amélioration obtenue est mise à profit soit pour utiliser la conduite flexible incorporant ladite carcasse métallique à de plus fortes profondeurs puisque, grâce à la présente invention, la carcasse métallique est apte à reprendre davantage d'effort de pression externe, soit d'alléger la carcasse métallique de près de 25 % en poids par une réduction de l'épaisseur du feuillard (0,8 mm au lieu de 1 mm, le poids étant ramené de 14,84 kg/m à 11, 11 kg/m).

De meilleures caractéristiques mécaniques sont obtenues lorsqu'on ajuste l'écrouissage du feuillard de base à une valeur plus élevée mais toujours conforme à la norme C850 (Rₚ 0,2 = 650 MPa).

Les valeurs des divers paramètres mentionnés précédemment et relatives au feuillard sont :

| | |
|---|---|
| limite d'élasticité avant formage | 660 MPa |
| allongement à la rupture A % | 34 |
| limite d'élasticité moyenne de la carcasse après formage | 725 MPa |
| allongement à la rupture de la carcasse A % | 20 |
| Résitance à l'écrasement de la carcasse | 176 bars |
| Poids de la carcasse | 14,84 kg/m. |

On constate que pour un même poids de carcasse, la résistance à l'écrasement est passée de 122 bars, avec un feuillard non écroui à 176 bars avec un feuillard écroui à Rₚ 0,2 = 650 MPa, soit une augmentation supérieure à 44 %.

Pour obtenir une résistance à l'écrasement de l'ordre de 122 bars, on peut utiliser un feuillard de nuance 304 L par exemple de dimensions 40 x 0,8 mm qui serait écroui à la norme de C850, pour l'obtention d'une carcasse de 8 pouces (≈ 20cm) de diamètre et dont le poids serait de 11,11 kg/m, soit une réduction du poids de 25 % et une résistance à l'écrasement de 135 bars.

Dans les tableaux ci-dessous :
- le tableau 1 concerne les diverses nuances de métal testées ainsi que les caractéristiques mesurées du feuillard et de la carcasse métallique, l'état 2B correspondant à un état non écroui, et les états CW1 (cold work 1), CW2 et CW3 correspondant à différents états d'écrouissage répondant aux dénominations C850, et C1000 de la norme En 10088-2 ;
- le tableau 2 représente l'évolution de la résistance à l'écrasement en bars sous une pression externe et du poids de la carcasse métallique en fonction des caractéristiques du feuillard utilisé pour une conduite flexible comprenant une voûte de pression.

Le tableau 1 montre que tous les matériaux utilisés pour la fabrication d'un feuillard qui présentent un allongement à la rupture (A %) supérieure à 20 dans les états non écrouis et écrouis sont aptes à être formés et donc à constituer une carcasse métallique. Seule la nuance 316 L, lorsqu'elle est écrouie à la norme C1000, ne convient pas car l'allongement à la rupture (A %) est inférieur à 15 %. On voit que le duplex et le superduplex n'ont pas besoin d'être écroui, ce qu'on savait déjà puisqu'ils sont utilisés pour la fabrication de carcasses métalliques. Toutefois, l'inconvénient majeur de ces matériaux étant leur coût, ils sont réservés à des applications très spécifiques de la conduite flexible.

Le tableau montre les gains qu'on peut obtenir avec la méthode selon l'invention.

La deuxième colonne indique que tous les matériaux écrouis à la norme C850 et qui présentent une limite d'élasticité sensiblement égale à 550 MPa produiraient une certaine résistance à l'écrasement en mode cardioïde, ladite résistance dépendant des caractéristiques géométriques du feuillard et de la carcasse utilisés. C'est ainsi que pour un feuillard de 100 x 2,5 m et un diamètre de carcasse de 23,75 cm (9 pouces et demi), la résistance à l'écrasement passe de 271 bars, à l'état 2B, à 331 bars après écrouissage à la norme C850 et pour une R_{.p.} 0,2 de 550 MPa.

La troisième colonne se réfère à un écrouissage à la norme C850 et pour une limite d'élasticité à Rp 0,2 de 650 MPa.

Il est aisé de constater les gains qu'on peut obtenir en passant de l'état 2B (non écroui) aux états écrouis selon la norme C850.

Les carcasses fabriquées avec un duplex ou un superduplex présentent une résistance à l'écrasement à l'état 2B pouvant varier entre 176 et 349 bars puisque leur limite d'élasticité Rₚ est proche de 650 MPa (634 et 650 MPa respectivement), en fonction des dimensions du feuillard et de la carcasse qui sont indiquées dans le tableau 2. Mais on constate qu'au lieu d'utiliser ces matériaux très coûteux, on peut utiliser des matériaux moins nobles et donc moins coûteux en les écrouissant à la norme C850, comme par exemple le 301, le 301 LN, le 304L ou même le 316 L. Pour de très grandes profondeurs où il est nécessaire d'avoir des résistances à l'écrasement très importantes, il peut être envisagé d'utiliser un alliage duplex ou superduplex qui serait écroui avant profilage du feuillard, de manière à conférer à la carcasse une plus grande résistance à l'écrasement pour autant que l'allongement à la rupture du feuillard écroui soit au moins égal à 15 %.

Dans tous les cas, la présente invention permet un allégement supérieur à 10 % lorsque l'on écrouit le feuillard à la norme C850, cet allégement étant d'autant plus grand que les dimensions du feuillard sont importantes.

En pratique, tous les métaux qui présentent, après écrouissage, une limite élastique supérieure à 500 MPa et un allongement à la rupture au moins égale à 15 %, et de préférence supérieure à 20 %, peuvent être utilisés pour la fabrication d'une carcasse métallique. Plus particulièrement, on utilise des aciers inoxydables de type austénitiques instables et incluant par exemple les nuances 301, 301 LN, 304, 304 L, etc., ou stables et incluant par exemple les nuances 316 L, 316 LN, 304 LN et nuances plus alliées, et austéno-ferritiques qui conservent, après écrouissage, une aptitude au formage. Bien que le procédé selon l'invention puisse être mise en oeuvre avec pratiquement tous les métaux et/ou leurs alliages, les effets les plus intéressants ont été obtenus avec les métaux austénitiques et austéno-ferritiques.

Comme on peut le voir sur le tableau 2, les nuances utilisées présentent, après écrouissage, une résistance à l'écrasement, en mode cardioïde, comprise entre 114 et 376 bars, étant entendu que ces limites peuvent varier en fonction de la géométrie du feuillard. Toutefois, il est suggéré de ne pas être inférieure à 100 ou 110 bars, la limite supérieure pouvant dépasser les 400 bars.

De la même manière, la limite élastique Rₚ 0,2 préconisée est d'être comprise entre 500 et 1000 MPa mais il est possible de faire varier ces limites pour autant que le double critère d'un allongement à la limite (A %) et d'une résistance à l'écrasement soit respecté.

Bien que la présente invention ait été décrite pour un feuillard d'une conduite flexible, il est entendu que ledit feuillard écroui peut être utilisé pour la réalisation d'une carcasse utilisable dans un ombilical.

**TABLEAU I**

| **Nuance** | **état (écrouissage)** | | **Caractéristiques état feuillard** | | **Caractéristiques état profilé** | |
|---|---|---|---|---|---|---|
| | état | état (norme) | Rₚ 0,2 | A % | Rₚ 0,2 | A % profil |
| 301-304L | 2B | 2B | 310 | 46 | 539 | 52 |
| 316L | 2B | 2B | 330 | 40 | 550 | |
| 301LN | 2B | 2B | 424 | 47 | 619 | 50 |
| 301LN sk | skin pass | 2B | 466 | 38 | 630 | 53 |
| 301LN | CW1 | C850 | 552 | 38 | 600 | 30-35 |
| 301 | CW1 | C850 | 557 | 37 | 584 | 31 |
| 301 | CW2 | C850+ | 660 | 34 | 725 | 20 |
| 316L | CW2 | C850+ | 678 | 23 | 730 | 10 |
| 316L | CW3 | C1000 | 895 | 10 | 950 | 5 |
| DUPLEX | 2B | 2B | 634 | 27 | 720 | 17 |
| 301 | CW3 | C1000 | 877 | 22 | 930 | 10 |
| superduplex | 2B | 2B | 650 | 30 | 850 | 19 |

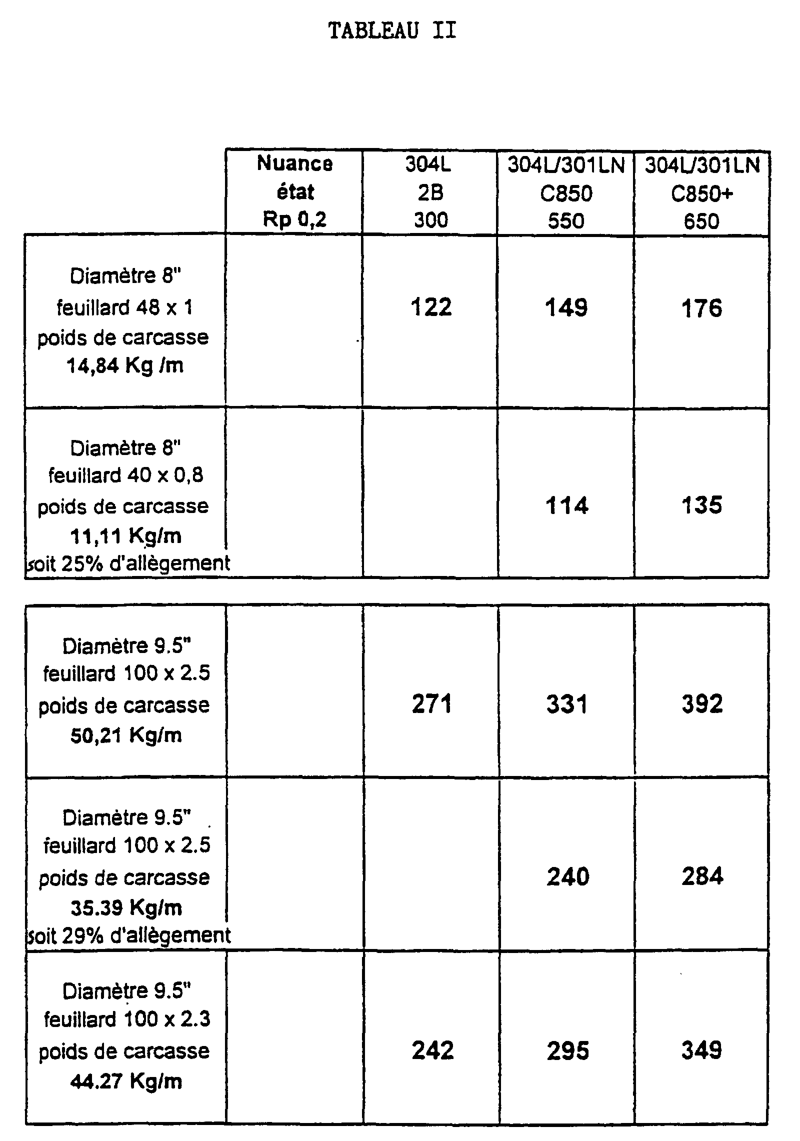

## Revendications

1. Procédé de fabrication d'une carcasse métallique utilisable dans une conduite flexible ou un ombilical comprenant une voûte de pression, dans lequel il est utilisé une bande d'un feuillard métallique qui est profilée puis enroulée hélicoïdalement pour constituer ladite carcasse métallique qui présente, en mode cardioïde, une résistance à l'écrasement donnée, **caractérisé en ce que** ledit feuillard est écroui avant profilage pour lui conférer un allongement à la rupture supérieur à 15 % et **en ce que** ladite carcasse métallique qui est réalisée à partir dudit feuillard écroui présente, en mode cardioïde, une résistance à l'écrasement supérieure d'au moins 15 % à ladite résistance à l'écrasement donnée, c'est-à-dire à la résistance à l'écrasement de la même carcasse obtenue à partir d'un feuillard n'ayant pas subi ledit écrouissage.

2. Procédé selon la revendication 1, **caractérisé en ce que** l'allongement à la rupture du feuillard écroui est supérieur à 20 %.

3. Procédé selon l'une des revendications 1 ou 2, **caractérisé en ce que** le métal du feuillard est choisi parmi les aciers inoxydables de type austénitiques instables ou stables et austéno-ferritiques qui conservent, après écrouissage, une aptitude au formage.

4. Procédé selon l'une des revendications précédentes, **caractérisé en ce que** les métaux utilisés présentent, après écrouissage, une limite élastique supérieure à 500 MPa et un allongement à la rupture supérieur à 20 %.

5. Procédé selon l'une des revendications précédentes, **caractérisé en ce que** la limite élastique du matériau, après écrouissage, est comprise entre 500 et 1000 MPa et l'allongement à la rupture est supérieur à 20 %.

6. Procédé selon l'une des revendications précédentes, **caractérisé en ce que** la résistance à l'écrasement, en mode cardioïde, de la carcasse est comprise entre 110 et 400 bars.

## Patentansprüche

1. Verfahren zur Herstellung einer Metallkarkasse, die in einer flexiblen Leitung oder einem Verbindungskabel mit Druckgewölbe verwendbar ist, wobei ein Metallband verwendet wird, das profiliert, dann spiralförmig aufgerollt wird, um die Metallkarkasse zu bilden, die im Kardioidmodus einen gegebenen Druckverformungswiderstand aufweist, **dadurch gekennzeichnet, daß** das Band vor der Profilierung kaltgehärtet wird, um ihm eine Bruchdehnung oberhalb von 15% zu verleihen, und dadurch, daß die Metallkarkasse, die aus dem kaltgehärteten Band hergestellt ist, im Kardioidmodus einen Druckverformungswiderstand aufweist, der um mindestens 15% höher ist als der gegebene Druckverformungswiderstand, das heißt, der Druckverformungswiderstand der gleichen Karkasse, die aus einem Band hergestellt ist, das keiner Kalthärtung unterzogen worden ist.

2. Verfahren nach Anspruch 1, **dadurch gekennzeichnet, daß** die Bruchdehnung des kaltgehärteten Bands oberhalb von 20% ist.

3. Verfahren nach einem der Ansprüche 1 oder 2, **dadurch gekennzeichnet, daß** das Metallband unter den instabilen oder stabilen austenitischen und austenitisch-ferritischen rostfreien Stählen ausgewählt ist, die nach dem Kalthärten eine Formbarkeit bewahren.

4. Verfahren nach einem der vorstehenden Ansprüche, **dadurch gekennzeichnet, daß** die verwendeten Metalle nach dem Kalthärten eine Streckgrenze oberhalb von 500 MPa und eine Bruchdehnung oberhalb von 20% aufweisen.

5. Verfahren nach einem der vorstehenden Ansprüche, **dadurch gekennzeichnet, daß** die Streckgrenze des Materials nach dem Kalthärten zwischen 500 und 1000 MPa und die Bruchdehnung oberhalb von 20% ist.

6. Verfahren nach einem der vorstehenden Ansprüche, **dadurch gekennzeichnet, daß** der Druckverformungswiderstand der Karkasse im Kardioidmodus zwischen 110 und 400 Bar ist.

## Claims

1. Method of manufacturing a metal carcass that can be used in a flexible pipe or umbilical comprising a pressure vault, in which use is made of a band of metal strip which is shaped and then helically wound to form the said metal carcass which, in cardioid mode, has a given collapse strength, **characterized in that** the said metal strip is work-hardened prior to shaping to give it a 15% higher elongation at rupture, and **in that** the said metal carcass which is made from the said work-hardened metal strip has, in cardioid mode, a collapse strength which is at least 15% higher than the said given collapse strength, i.e. than the collapse strength of the same carcass obtained from a metal strip which has not been work-hardened.

2. Method according to claim 1, **characterized in that** the elongation at rupture of the work-hardened metal strip is higher than 20%.

3. Method according to one of claims 1 and 2, **characterized in that** the metal of the metal strip is chosen from stainless steels of the unstable or stable austenitic type and austeno-ferritic stainless steels which, after work-hardening, retain the ability to be shaped.

4. Method according to one of the preceding claims, **characterized in that** the metals used have, after work-hardening, a yield strength higher than 500 MPa and an elongation at rupture higher than 20%.

5. Method according to one of the preceding claims, **characterized in that** the yield strength of the material, after work-hardening, is between 500 and 1000 MPa and the elongation at rupture is higher than 20%.

6. Method according to one of the preceding claims, **characterized in that** the collapse strength, in cardioid mode, of the carcass is between 110 and 400 bar.
